# EUROPÄISCHE PATENTANMELDUNG

(11) **EP 3 266 730 A2**
(43) Veröffentlichungstag der Anmeldung: **10.01.2018**
(21) Anmeldenummer: 17175670.3
(22) Anmeldetag: 13.06.2017
(51) Int. Cl.: B65G 1/137, B64C 39/02

(54) **VORRICHTUNG ZUM AUFBEWAHREN UND TRANSPORTIEREN VON BAUTEILEN UND VERFAHREN ZUR VERSORGUNG MINDESTENS EINER VERARBEITUNGSEINRICHTUNG MIT BAUTEILEN**

(30) Priorität: 15.06.2016 DE 102016210627
(71) Anmelder: Nickel Holding GmbH, 50968 Köln (DE)
(72) Erfinder: Nickel, Alexander, 50968 Köln (DE)
(74) Vertreter: Hörschler, Wolfram Johannes

(57) **Zusammenfassung**

Aufbewahrungs- und Transportvorrichtung (10) zum Aufbewahren und Transportieren von Bauteilen (18), umfassend einen Multicopter (11) und mindestens ein Teilemagazin (14) zur Aufnahme von Bauteilen (18), wobei das Teilemagazin (14) einen Boden (40) und Seitenwände (42) aufweist und wobei die Vorrichtung (10) für einen fliegenden Transport der im Teilemagazin (14) aufgenommenen Bauteile (18) eingerichtet ist. Die Kombination aus dem Multicopter (11) und dem Teilemagazin (14) wird als Flugmagazin bezeichnet. Ferner ist vorgesehen, dass das mindestens eine Teilemagazin (14) fest mit dem Multicopter (11) verbunden ist und die Vorrichtung (10) ferner eingerichtet ist, als Aufbewahrungseinrichtung an einer Entnahmestation einer Verarbeitungseinrichtung aufgenommen zu werden, wobei in dem Teilemagazin (14) aufgenommene Bauteile (18) durch die Entnahmestation von oben aus dem Teilemagazin (14) entnehmbar sind.

## Beschreibung

Die Erfindung betrifft eine Aufbewahrungs- und Transportvorrichtung zum Aufbewahren und Transportieren von Bauteilen, welche einen Multicopter umfasst. Des Weiteren betrifft die Erfindung eine Entnahmestation, mit der Bauteile aus der Aufbewahrungs- und Transportvorrichtung entnommen werden können. Ein weiterer Aspekt der Erfindung betrifft ein Verfahren zur Versorgung mindestens einer Verarbeitungseinrichtung mit Bauteilen unter Verwendung mindestens einer Entnahmestation und einer Vielzahl von Aufbewahrungs- und Transportvorrichtungen.

Im Stand der Technik sind Multicopter und Drohnen bekannt, welche autonom oder ferngesteuert von einem Startpunkt zu einem Zielpunkt fliegen können.

Aus DE 20 2015 005 962 U1 ist eine modular erweiterbare Paketdrohne bekannt, welche eingerichtet ist, mehrere Pakete gleichzeitig zu transportieren. Dazu umfasst die Drohne Segmente mit Rotoren und ein oder mehrere Paketsegmente, welche zum Tragen von Paketen bestimmt sind. Die Anzahl der Segmente kann je nach Bedarf variiert werden.

Das Dokument DE 10 2014 112 480 A1 beschreibt eine Vorrichtung zur Annahme und Aufbewahrung von Post- und Liefersendungen. Zum Transport verwendete Drohnen können auf einer Landeplattform landen und dort Sendungen abgeben. Die Vorrichtung weist einen Raum mit einer verschließbaren Öffnung auf, durch die Sendungen von der Landeplattform in den Innenraum gelangen können. Zum Aufladen oder zum Aufbewahren einer defekten Drohne kann eine Drohne ebenfalls durch die Öffnung in den Innenraum gelangen. Zum Aufbewahren der Sendungen sind Lagerbehälter mit übereinanderliegenden rotierbaren Etagen vorgesehen. Ein Greifarm befördert Sendungen von der Vorderseite in ein Fach des Lagerbehälters hinein. Zur Entnahme von Sendungen befördert der Greifarm die Sendung zu einer Ausgabeöffnung.

Aus WO2016/030797 A1 ist ein Produktbeförderungssystem für eine geschlossene Umgebung bekannt. Dabei werden zwei Mengen an Drohnen verwendet, wobei eine erste Menge an Drohnen produzierte Teile von den Produktionsmaschinen in das Lager fliegt und eine zweite Menge von Drohnen zwischen dem Lager und den Verpackungsanlagen fliegt. Die Drohnen weisen dazu jeweils entsprechend angepasste Greifmittel auf, um die jeweiligen Waren bzw. deren Umverpackung zu greifen.

Nachteilig am Stand der Technik ist, dass die zum Transport verwendeten Drohnen entweder nur entsprechend verpackte Güter, beispielsweise in Form eines Pakets, transportieren können, oder jeweils speziell an das zu transportierende Produkt angepasst werden müssen.

Des Weiteren ist am Stand der Technik nachteilig, dass bei einer Zwischenlagerung die transportierten Bauteile in eine Lagereinrichtung umgepackt werden müssen. Dies erfordert die Verwendung von Umverpackungen für die zu transportierenden Bauteile.

### Offenbarung der Erfindung

Es wird eine Aufbewahrungs- und Transportvorrichtung zum Aufbewahren und Transportieren von Bauteilen vorgeschlagen. Die Aufbewahrungs- und Transportvorrichtung umfasst einen Multicopter und mindestens ein Teilemagazin zur Aufnahme von Bauteilen, wobei das Teilemagazin einen Boden und Seitenwände aufweist und wobei die Vorrichtung für einen fliegenden Transport der im Teilemagazin aufgenommenen Bauteile eingerichtet ist. Ferner ist vorgesehen, dass das mindestens eine Teilemagazin fest mit dem Multicopter verbunden ist und die Vorrichtung ferner eingerichtet ist, als Aufbewahrungseinrichtung an einer Entnahmestation einer Verarbeitungseinrichtung aufgenommen zu werden, wobei in dem Teilemagazin aufgenommene Bauteile durch die Entnahmestation von oben aus dem Teilemagazin entnehmbar sind. Das Teilemagazin ist so ausgestaltet ist, dass die Oberseite des Teilemagazins der Vorrichtung, wenn diese an einer Entnahmestation und/oder an einer Befüllstation aufgenommen ist, für das Beladen und das Entladen frei zugänglich ist, wobei ein Freiraum oberhalb des Teilemagazins vorhanden ist, der eine vollautomatisierte Entnahme von in dem Teilemagazin aufgenommenen Bauteilen nach oben gestattet, wobei entweder die Oberseite des Teilemagazins immer offen zugänglich ist oder die Oberseite des Teilemagazins verschließbar ist, so dass die Oberseite des Teilemagazins während des fliegenden Transports verschlossen ist, wobei die Verschlusseinrichtung einen Antrieb umfasst, über den ein Öffnen und ein Schließen der Verschlusseinrichtung automatisierbar ist

Durch die vorgeschlagene Vorrichtung müssen die transportierten Bauteile an der Verarbeitungseinrichtung nicht erst in einen Vorratsbehälter der Verarbeitungseinrichtung, wie beispielsweise ein Teilemagazin, umgepackt werden. Vielmehr werden die durch die Verarbeitungseinrichtung benötigten Bauteile direkt bei Bedarf aus der vorgeschlagenen Aufbewahrungs-und Transportvorrichtung entnommen, so dass die Vorrichtung nach dem Transport als Aufbewahrungsvorrichtung für die Bauteile dient. Die vorgeschlagene Vorrichtung stellt ein fliegendes Teilemagazin dar und wird im Folgenden auch als "Flugmagazin" bezeichnet.

Das Flugmagazin ist eine feste Kombination aus einem Teilemagazin sowie einem Multicopter (Drohne) für den Transport. Beide Komponenten sind fest miteinander verbunden und werden nicht entkoppelt. Die Vorrichtung transportiert dabei ohne Bodenkontakt ein oder mehrere Bauteile, beispielsweise Bauteile in der Fertigung für Automobile, von einer Befüllstation zu einer Verarbeitungseinrichtung, und deckt damit den gesamten Logistikprozess innerhalb einer Produktionsumgebung ab.

Multicopter sind im Stand der Technik grundsätzlich bekannt. Ein Multicopter umfasst vier oder mehr Rotoren, über die sowohl der Auftrieb als auch der Vortrieb erzeugt werden. Bevorzugt werden 4 bis 16 Rotoren eingesetzt, wobei die Anzahl der Rotoren von der Größe und der geforderten Nutzlast abhängig ist.

Insbesondere zeichnet sich die vorgeschlagene Vorrichtung dadurch aus, dass diese wie ein übliches Teilemagazin in der Logistik-Industrie von der oberen Seite beladen und entladen wird. Das Magazin ist dabei so aufgebaut, dass das Beladen und das Entladen vollautomatisiert erfolgen können.

Die Vorrichtung ist daher so ausgestaltet, dass die Oberseite des Teilemagazins der Vorrichtung für das Beladen und das Entladen frei zugänglich ist. Daher ist die Vorrichtung so ausgestaltet, dass, wenn die Vorrichtung an einer Entnahmestation und/oder an einer Befüllstation aufgenommen ist, die Oberseite des Teilemagazins frei zugänglich ist.

Die Oberseite des Teilemagazins wird als frei zugänglich verstanden, wenn die Oberseite des Teilemagazins, welches einen Boden und vier Seitenwände umfasst, offen ist und oberhalb des Teilemagazins ein Freiraum vorhanden ist, der die Entnahme von in dem Teilemagazin aufgenommen Bauteilen nach oben gestattet.

Um einen ausreichenden Freiraum oberhalb des Teilemagazins zu gewährleisten, sind Rotoren des Flugmagazins bevorzugt derart angeordnet, dass diese von oben gesehen nicht oder nur geringfügig mit dem Teilemagazin überlappen. Unter einer geringfügigen Überlappung wird dabei verstanden, dass die von den Rotoren überdeckte Grundfläche des Teilemagazins weniger als 25% der Gesamtfläche und besonders bevorzugt weniger als 10% der Gesamtfläche des Teilemagazins beträgt. Ganz besonders bevorzugt tritt keine Überlappung auf, so dass die überdeckte Fläche einen Anteil von 0% der Gesamtfläche beträgt. Die Grundfläche des Teilemagazins entspricht in der Regel der Fläche des Bodens des Teilemagazins.

Bevorzugt sind die Rotoren jeweils über eine verschwenkbare oder abknickbare Halterung an dem Multicopter aufgenommen. Dies erlaubt es, wenn die Transport- und Aufbewahrungsvorrichtung nicht im Flug ist, die Rotoren durch eine Bewegung der Halterung in eine andere Position zu bringen. Je nach Anwendungszweck kann auf diese Weise der Freiraum oberhalb des Teilemagazins vergrößert werden, so dass bevorzugt keine Überlappung der Grundfläche des Teilemagazins mit den Rotoren auftritt. Des Weiteren ist es denkbar, durch eine Bewegung der Halterung die Rotoren so zu bewegen, dass die Außenabmessungen der Vorrichtung verringert werden. Auf diese Weise wird für die Aufnahme der Transport- und Aufbewahrungsvorrichtung an einer Entnahmestation weniger Raum benötigt.

Überdecken die Rotoren die Fläche der Oberseite des Teilemagazins teilweise, so ist der vertikale Abstand der Rotoren zur Oberkante des Teilemagazins bevorzugt größer als die Höhe des Teilemagazins. Dies erlaubt es, Bauteile im Teilemagazin von oben zu greifen, über die Seitenwände des Teilemagazins hinaus anzuheben und anschließend in einer Richtung parallel zur Grundfläche des Teilemagazins aus dem Bereich der Rotoren zu entfernen.

Liegt keine Überlappung der Rotoren mit der Grundfläche des Teilemagazins vor, so können im Teilemagazin aufgenommene Bauteile einfach entnommen werden, indem diese auf eine Höhe angehoben werden, die größer ist als die Höhe der Seitenwände bzw. die Höhe der Rotoren.

In einer Ausführungsform der Vorrichtung ist die Oberseite des Teilemagazins immer offen zugänglich.

In einer weiteren Ausführungsform der Vorrichtung ist die Oberseite des Teilemagazins verschließbar ausgeführt. Dies erlaubt es, die Oberseite des Teilemagazins während des fliegenden Transports zu verschließen und bei Aufnahme an einer Entnahmestation oder an einer Befüllstation wieder zu öffnen. Hierdurch wird die Sicherheit erhöht, da während des fliegenden Transports keine Bauteile aus dem Teilemagazin herausfallen können.

Zum Verschließen der Oberseite des Teilemagazins ist bevorzugt eine Verschlusseinrichtung vorgesehen, die beispielsweise als ein Rollverschluss oder als ein horizontaler Schutzvorhang ausgeführt ist. Mit der Verschlusseinrichtung wird dann die Oberseite des Teilemagazins während des fliegenden Transports verschlossen und anschließend wieder geöffnet, so dass das Teilemagazin von der Oberseite wieder frei zugänglich ist. Bei Ausführung als horizontaler Schutzvorhang kann dieser beispielsweise als eine reißfeste Folie, als ein Netz oder eine Stoffbahn ausgeführt sein. Der horizontale Schutzvorhang oder der Rollverschluss wird bevorzugt in Schienen horizontal geführt. Der horizontale Schutzvorhang oder der Rollverschluss kann dann zum Verschließen des Teilemagazins über die Oberseite gezogen werden. Zum Öffnen wird die Verschlusseinrichtung wieder zurückgezogen und die Oberseite des Teilemagazins wieder freigegeben. Ein Rollverschluss besteht aus mehrehren miteinander gelenkig verbundenen Profilen, die an den Seiten durch Führungsschienen geführt sind. Auch der Rollverschluss wird zum Verschließen über die Oberseite des Teilemagazins geführt und zum Öffnen wieder zurückgezogen. Über einen Antrieb, beispielsweise über einen Elektromotor, kann das Öffnen bzw. Schließen der Verschlusseinrichtung automatisiert werden.

Der Multicopter der Vorrichtung ist bevorzugt derart ausgestaltet, dass dieser Flugmanöver ferngesteuert oder autonom durchführen kann. Dazu kann der Multicopter verschiedene Sensoren für die Navigation sowie eine Steuerungseinrichtung umfassen. Diese Sensoren können beispielsweise als Empfänger für ein Satellitennavigationssystem oder ein anderes, für die Bestimmung der Position in Innenräumen geeignetes System umfassen. Beispielsweise können für eine Navigation im Innenraum Pseudo-Satelliten vorgesehen werden, deren Signale von einem entsprechenden Empfänger ausgewertet werden. Alternativ oder zusätzlich können die Signalstärken von Funksendern wie WLAN-Basisstationen ausgewertet werden, um die Position zu ermitteln, wenn kein Satellitensignal zur Verfügung steht. Des Weiteren kann zusätzlich oder alternativ eine Kamera vorgesehen sein, um die Position anhand bekannter Objekte oder Marker zu bestimmen. Letzteres erlaubt insbesondere bei Starts und Landungen der Transport- und Aufbewahrungsvorrichtung eine exakte Positionsbestimmung relativ zur Start- bzw. Landeposition.

Bei einer Fernsteuerung umfasst der Multicopter einen Empfänger, um Fernsteuersignale zu empfangen, wobei die empfangen Signale in die entsprechenden Flugmanöver umgesetzt werden.

Bei Einrichtung für das autonome Ausführen von Flugmanövern umfasst die Vorrichtung bevorzugt eine Empfangseinheit, über die ein Flugziel von einer Zentraleinheit vorgebbar ist. Das Flugmanöver selbst wird nach der Vorgabe des Ziels ohne weitere Fernsteuersignale ausgeführt.

Der Empfänger für die Fernsteuersignale bzw. die Empfangseinheit für den Empfang eines Flugziels können auch als Kommunikationseinheit ausgestaltet sein, die sich mit einem Funknetzwerk, beispielsweise WLAN, Bluetooth oder einem Mobilfunknetz verbindet.

Bevorzugt umfasst die Vorrichtung Sensoren zur Erfassung von Hindernissen in der Umgebung. Derartige Sensoren können beispielsweise Radarsensoren, Ultraschallsensoren und/oder Lidarsensoren umfassen. Bevorzugt werden 3D-Ultraschallsensoren eingesetzt, die Hindernisse in allen Raumrichtungen erkennen können. Des Weiteren ist die Vorrichtung bevorzugt eingerichtet, bei einem Flugmanöver erkannten Hindernissen auszuweichen. Dies ist insbesondere dann sinnvoll, wenn die Vorrichtung das Flugmanöver autonom ausführt. Aber auch im Fernsteuerbetrieb können entsprechende Maßnahmen zur Vermeidung einer Kollision mit einem erkannten Hindernis getroffen werden.

Bevorzugt umfasst die Vorrichtung an ihrer Unterseite eine Anzeigeeinheit zur Darstellung eines optischen Codes. Die Anzeigeeinheit ist bevorzugt als ein Bildschirm oder als eine Leuchtanzeige mit einer oder mehreren Leuchtdioden ausgestaltet.

Der optische Code ist bevorzugt ausgewählt aus 1 D-Barcodes, 2D-Matrixcodes und Farbcodes. 1 D-Barcodes sind beispielsweise übliche Strichcodes. Ein bekanntes Beispiel für 2D-Matrixcodes ist der QR-Code.

Die Vorrichtung ist bevorzugt eingerichtet, über den optischen Code Daten auszugeben, wobei die Daten ausgewählt sind aus Angaben über den Inhalt des Teilemagazins, Angaben über das Flugziel und Angaben über den Ladezustand eines Energiespeichers.

Bei Verwendung von Barcodes oder 2D-Matrixcodes können einfache optische Lesegeräte verwendet werden, um die auf der Anzeigeeinheit kodiert dargestellten Informationen auszulesen. Bei Verwendung eines einfachen Farbcodes ist hingegen kein Lesegerät erforderlich. Ein Farbcode kann beispielsweise als ein oder als mehrere farbige Bereiche ausgestaltet sein. Beispielsweise kann eine rote Leuchtdiode anzeigen, dass das Teilemagazin leer ist und eine grüne Leuchtdiode kann anzeigen, dass sich momentan Bauteile in dem Teilemagazin befinden.

Des Weiteren ist es denkbar, als optischer Code ein Symbolbild oder ein Foto des bzw. der momentan im Teilemagazin der Vorrichtung aufgenommen Bauteile darzustellen. Auch in diesem Fall wird kein Lesegerät benötigt.

Bevorzugt umfasst die Vorrichtung ein Smartphone oder ein Tablet. Das Smartphone bzw. das Tablet können in der Vorrichtung als Anzeigeeinheit verwendet werden. Hierzu wird das Smartphone bzw. Tablet bevorzugt am Boden der Vorrichtung so angeordnet, dass das Display des Smartphones bzw. des Tablets nach unten weist. Befindet sich die Vorrichtung im Flug, kann dann das Display vom Boden aus leicht abgelesen werden. Des Weiteren ist es denkbar, das Smartphone bzw. das Tablet als Steuerungseinrichtung bzw. als ein Teil einer Steuerungseinrichtung der Vorrichtung einzusetzen. Heutige Smartphones und Tablets weisen leistungsfähige Prozessoren sowie eine große Speicherkapazität auf und verfügen bereits über Kommunikationseinrichtungen, über die eine Verbindung zu einem Funknetzwerk wie beispielsweise WLAN, Bluetooth oder einem Mobilfunknetz hergestellt werden kann. Des Weiteren umfassen die Smartphones und Tablets eine Vielzahl von Sensoren, wie beispielsweise Lagesensoren, Beschleunigungssensoren und Kameras sowie Empfänger für Satellitennavigationssysteme, die zur Steuerung der Vorrichtung verwendet werden können.

Das Teilemagazin der Vorrichtung weist einen bevorzugt quaderförmigen Innenraum auf, in dem Bauteile aufgenommen werden können. Die Dimensionen des Innenraums können je nach geforderter Anwendung festgelegt werden, wobei typische Abmessungen in der Länge und Breite im Bereich von 50 mm bis 1000 mm, bevorzugt von 100 mm bis 800 mm und besonders bevorzugt im Bereich von 200 mm bis 500 mm betragen. Ein in der Logistikindustrie übliches Maß ist hierbei 400 mm in der Länge und 300 mm in der Breite.

Die Höhe des Teilemagazins beträgt bevorzugt im Bereich von 25 mm bis 250 mm, besonders bevorzugt im Bereich von 50 mm bis 150 mm und besonders bevorzugt im Bereich von 75 mm bis 100 mm.

Bevorzugt umfasst das Teilemagazin eine wechselbare Schablone zur Aufnahme der Bauteile. Die Schablonen werden häufig auch als Tray oder Tiefzieh-Tray bezeichnet und geben definierte Positionen für die aufzunehmenden Bauteile vor, so dass diese beim Transport nicht verrutschen können und immer an einer definierten Position liegen. Dies erleichtert die automatisierte Beladung und die automatisierte Entnahme der Bauteile. Dabei ist es auch denkbar, zum Beladen ein gegebenenfalls im Teilemagazin der Vorrichtung vorhandenes leeres Tray zu entnehmen und anschließend ein Tray gemeinsam mit in dem Tray aufgenommenen Bauteilen in das Teilemagazin einzusetzen.

Zur Versorgung mit elektrischer Energie umfasst die Vorrichtung bevorzugt mindestens einen Energiespeicher, beispielsweise mindestens einen schnellladefähigen Akkumulator und/oder mindestens einen Superkondensator. Während die Vorrichtung still steht, beispielsweise beim Beladen oder während die Vorrichtung als Aufbewahrungsvorrichtung an einer Entnahmestation aufgenommen ist, wird der Energiespeicher bevorzugt wieder aufgeladen. Bevorzugt umfasst die Vorrichtung mindestens zwei Energiespeicher, die an verschiedenen Stellen der Vorrichtung angeordnet sind, um die Vorrichtung auszubalancieren.

Die Vorrichtung kann zudem Warnmittel umfassen, um Personen vor einer Kollision mit der Vorrichtung zu warnen. Dazu können Signalleuchten, Blinklichter, oder Lautsprecher vorgesehen werden, mit denen entsprechende Warnsignale bzw. Warntöne erzeugt werden können. Dabei ist es denkbar, Warntöne nur dann zu erzeugen, wenn durch die Vorrichtung ein Hindernis erkannt wurde.

Ein weiterer Aspekt der Erfindung ist es eine Entnahmestation zur Entnahme von Bauteilen aus einer der beschriebenen Aufbewahrungs- und Transportvorrichtung bereitzustellen. Die vorgeschlagene Entnahmestation ist eingerichtet, mindestens eine Aufbewahrungs- und Transportvorrichtung als Aufbewahrungsvorrichtung aufzunehmen und umfasst zumindest eine Entnahmevorrichtung, welche eingerichtet ist, Bauteile aus dem Teilemagazin einer Aufbewahrungs- und Transportvorrichtung zu entnehmen. Die Entnahmestation ist ferner eingerichtet, bei Unterschreitung eines vorgegebenen Vorrats an Bauteilen in den aufgenommen Aufbewahrungs- und Transportvorrichtungen ein Signal an eine Zentraleinheit zu senden.

Die Entnahmestation ist bevorzugt Teil einer Verarbeitungseinrichtung oder ist einer Verarbeitungseinrichtung zugeordnet. Die Entnahmestation ersetzt dabei ein Zwischenlager der Verarbeitungseinrichtung. Die von der Verarbeitungseinrichtung benötigten Bauteile werden direkt bei Bedarf durch die Entnahmestation der Verarbeitungseinrichtung zur Verfügung gestellt.

Zur Aufbewahrung der Bauteile wird die beschriebene Aufbewahrungs- und Transportvorrichtung eingesetzt, wobei die Entnahmestation eingerichtet ist, mindestens eine dieser Vorrichtungen aufzunehmen. Bevorzugt ist die Entnahmestation eingerichtet, eine Vielzahl von Aufbewahrungs- und Transportvorrichtungen aufzunehmen. Bevorzugt können von 2 bis 100 Aufbewahrungs- und Transportvorrichtungen aufgenommen werden und besonders bevorzugt können von 6 bis 20 Aufbewahrungs- und Transportvorrichtungen aufgenommen werden.

Die Aufbewahrungs- und Transportvorrichtungen umfassen jeweils mindestens ein Teilemagazin, welches derart eingerichtet ist, dass im Teilemagazin aufgenommene Bauteile von oben aus dem Teilemagazin entnommen werden können. Hierzu ist oberhalb des Teilemagazins der Aufbewahrungs- und Transportvorrichtung ein Freiraum vorgesehen. Dieser Freiraum bleibt auch nach Aufnahme der Aufbewahrungs- und Transportvorrichtung an der Entnahmestation erhalten. Zur Entnahme der einzelnen Bauteile umfasst die Entnahmestation eine Entnahmevorrichtung, welche beispielsweise als ein Roboterarm mit entsprechendem Werkzeug ausgestaltet ist. Als Werkzeug können beispielsweise Greifer oder Sauggreifer verwendet werden. Der Roboterarm kann mit seinem Werkzeug von oben in die Aufbewahrungs- und Transportvorrichtung eingreifen, ein Bauteil greifen und dieses nach oben aus dem Teilemagazin entnehmen. Das entnommene Bauteil kann anschließend der Verarbeitungseinrichtung übergeben werden oder, sofern der Roboterarm auch bei der Verarbeitung des Bauteils in der Verarbeitungseinrichtung verwendet wird, direkt verwendet werden.

Bei dem Roboterarm kann es sich um einen aus dem Stand der Technik bekannten Handlingsroboter oder um einen ebenfalls aus dem Stand der Technik bekannten kollaborativen Handlingsroboter handeln. Kollaborative Roboter sind besonders dann geeignet, wenn im Umfeld der Verarbeitungsstation nicht nur Maschinen, sondern auch Menschen eingesetzt werden.

Wird durch die Entnahmestation erkannt, dass die Menge an in den Aufbewahrungs- und Transportvorrichtungen bzw. in deren Teilemagazinen bevorrateten Bauteilen zur Neige geht, so wird ein entsprechendes Signal an eine Zentraleinheit übermittelt. Die Zentraleinheit stellt eine übergeordnete Einrichtung dar, die die gesamte Logistikkette steuert. Die Zentraleinheit kann dann nach Erhalt des entsprechenden Signals eine Aufbewahrungs- und Transportvorrichtung mit den benötigten Bauteilen zu der Verarbeitungsstation bzw. zu der entsprechenden Entnahmestation entsenden.

Ferner ist bevorzugt vorgesehen, dass die Entnahmestation eingerichtet ist, bei einer autonomen Steuerung der Aufbewahrungs- und Transportvorrichtungen durch die Entnahmestation ein Signal an die Zentraleinheit und/oder an entleerte Aufbewahrungs- und Transportvorrichtungen zu senden, so dass diese zum Beladen zu einer Befüllstation zurückkehren. Alternativ kann dieses Signal auch durch die Zentraleinheit gegeben werden. Bei einer Fernsteuerung der Aufbewahrungs- und Transportvorrichtungen durch die Entnahmestation kann in diesem Fall ein entsprechendes Signal an die Zentraleinheit abgesendet werden, so dass diese die Aufbewahrungs- und Transportvorrichtungen zurück zu einer Befüllstation führt. Zur Kommunikation mit der zentralen Einrichtung bzw. mit den Aufbewahrungs- und Transportvorrichtungen verfügt die Entnahmestation bevorzugt über einen Sender und/oder über eine Kommunikationseinrichtung zur Verbindung mit einem Funknetzwerk wie WLAN, Bluetooth oder ein Mobilfunknetz. Des Weiteren kann auch ein kabelbasiertes Netzwerk zur Verbindung mit der Zentraleinheit eingesetzt werden.

Bevorzugt umfasst die Entnahmestation des Weiteren einen Zwischenspeicher, der zur Aufnahme einer Vielzahl von Aufbewahrungs- und Transportvorrichtungen eingerichtet ist, wobei der Zwischenspeicher eingerichtet ist, die aufgenommenen Aufbewahrungs- und Transportvorrichtungen nacheinander der Entnahmevorrichtung zuzuführen, welche Bauteile aus den Teilemagazinen entnimmt.

Der Zwischenspeicher ist bevorzugt als Stauförderer oder als Drehtisch ausgeführt, wobei der Zwischenspeicher derart eingerichtet ist, dass beladene Aufbewahrungs- und Transportvorrichtungen an einer Zugabestelle landen und in den Zwischenspeicher eingegeben werden, zur der Entnahmevorrichtung gefördert werden, die entladenen Aufbewahrungs- und Transportvorrichtungen zu einer Ausgabestelle gefördert werden, an der Ausgabestelle den Zwischenspeicher verlassen und wieder starten. Die Zugabestelle und die Ausgabestelle können jeweils als Lande- bzw. Startplattform ausgestaltet sein. Bevorzugt ist die Lande- bzw. Startplattform erhöht angeordnet, beispielsweise in einer Höhe im Bereich von 2 m bis 3 m. Durch eine derartige erhöhte Anordnung der Lande- bzw. Startplattform wird einer Kollision einer fliegenden Aufbewahrungs- und Transportvorrichtung mit Menschen vorgebeugt.

Mit Hilfe eines solchen Zwischenspeichers kann die Entnahmestation leicht eine große Anzahl an Aufbewahrungs- und Transportvorrichtungen aufnehmen. Diese werden raumsparend gelagert und der Reihe nach der Entnahmevorrichtung der Entnahmestation zugeführt. Wenn eine Aufbewahrungs- und Transportvorrichtung geleert wurde, wird durch den Zwischenspeicher eine weitere, befüllte Aufbewahrungs- und Transportvorrichtung zu der Entnahmevorrichtung gebracht. Die entleerten Aufbewahrungs- und Transportvorrichtungen werden durch den Zwischenspeicher zu der Ausgabestelle gefördert, von der diese wieder starten und zu einer Befüllstation zurückkehren.

Die Entnahmestation bzw. der Zwischenspeicher umfasst bevorzugt mindestens eine Ladestation, mit der der mindestens eine Energiespeicher einer Aufbewahrungs- und Transportvorrichtung wieder aufgeladen werden kann. Bevorzugt umfasst die Entnahmestation bzw. der Zwischenspeicher für jede der aufgenommenen Aufbewahrungs- und Transportvorrichtungen jeweils eine Ladestation, so dass alle Aufbewahrungs- und Transportvorrichtungen, die in der Entnahmestation aufgenommen sind, wieder aufgeladen werden können.

Die Erfindung betrifft des Weiteren eine Befüllstation, welche mindestens eine Aufnahmeeinrichtung für Aufbewahrungs- und Transportvorrichtungen und ein Lager umfasst. Bevorzugt umfasst die Befüllstation eine Beladeeinrichtung, mit der Bauteile aus einem Lager automatisiert entnommen werden können und in das Teilemagazin einer Aufbewahrungs- und Transportvorrichtung eingesetzt werden können. Alternativ ist es denkbar, dass das Beladen manuell durchgeführt wird. Zum Zwischenlagern der Aufbewahrungs- und Transportvorrichtungen kann die Befüllstation mindestens einen Zwischenspeicher als Aufnahmeeinrichtung umfassen, der beispielsweise als Stauförderer oder als Drehtisch ausgeführt ist.

Bevorzugt wird zum Beladen einer Aufbewahrungs- und Transportvorrichtung ein gegebenenfalls im Teilemagazin der Vorrichtung vorhandenes leeres Tray entnommen und anschließend ein Tray gemeinsam mit in dem Tray aufgenommenen Bauteilen in das Teilemagazin eingesetzt.

Die Befüllstation bzw. der Zwischenspeicher umfasst bevorzugt mit mindestens eine Ladestation, mit der der mindestens eine Energiespeicher einer Aufbewahrungs- und Transportvorrichtung wieder aufgeladen werden kann. Bevorzugt umfasst die Befüllstation bzw. der Zwischenspeicher für jede der aufgenommenen Aufbewahrungs- und Transportvorrichtungen jeweils eine Ladestation, so dass alle Aufbewahrungs- und Transportvorrichtungen, die in der Befüllstation aufgenommen sind, wieder aufgeladen werden können.

Ein weiterer Aspekt der Erfindung betrifft ein Verfahren zur Versorgung mindestens einer Verarbeitungseinrichtung mit Bauteilen unter Verwendung mindestens einer der beschriebenen Aufbewahrungs- und Transportvorrichtung, wobei Bauteile von mindestens einem Lager zu mindestens einer Verarbeitungseinrichtung transportiert werden und die mindestens eine Verarbeitungseinrichtung einen Vorrat an Bauteilen aufweist, umfassend die Schritte:
a) Beladen einer Aufbewahrungs- und Transportvorrichtung mit Bauteilen aus einem Lager an einer Befüllstation,
b) fliegender Transport der Bauteile von der Befüllstation zu einer Verarbeitungseinrichtung durch die Aufbewahrungs- und Transportvorrichtung,
c) Aufnehmen der Aufbewahrungs- und Transportvorrichtung als Aufbewahrungsvorrichtung an einer Entnahmestation der Verarbeitungseinrichtung,
d) Entnehmen der Bauteile aus der Aufbewahrungs- und Transportvorrichtung,
e) Rückflug der Aufbewahrungs- und Transportvorrichtung von der Verarbeitungseinrichtung zu einer Befüllstation.

Bevorzugt ist nach dem Anlaufen des Verfahrens an der Entnahmestation der Verarbeitungseinrichtung zu jedem Zeitpunkt mindestens eine Aufbewahrungs-und Transportvorrichtung aufgenommen. Hierdurch wird eine kontinuierliche Versorgung der Verarbeitungseinrichtung mit Bauteilen sichergestellt. Nur beim Anfahren des Verfahrens, bei dem eine Verarbeitungseinrichtung erstmalig mit Bauteilen versorgt wird, kann es vorkommen, dass noch keine der Aufbewahrungs- und Transportvorrichtungen an der Entnahmevorrichtung der Verarbeitungseinrichtung aufgenommen ist.

Der Rückflug der Aufbewahrungs- und Transportvorrichtung gemäß Schritt e) kann zu derselben Befüllstation erfolgen, an der die Vorrichtung im Schritt a) beladen wurde. Der Rückflug kann jedoch auch zu einer anderen Befüllstation erfolgen. Bevorzugt wird das Verfahren anschließend erneut durchlaufen, so dass eine kontinuierliche Versorgung mit Bauteilen gewährleistet ist. Beim erneuten Durchlaufen ist es denkbar, dass durch die Aufbewahrungs- und Transportvorrichtung eine andere Verarbeitungsvorrichtung mit Bauteilen versorgt wird.

Die Aufbewahrungs- und Transportvorrichtung, die Befüllstation und die Entnahmestation sind dabei jeweils zur Ausführung des beschriebenen Verfahrens ausgebildet und eingerichtet, so dass die im Rahmen des Verfahrens beschriebenen Merkmale entsprechend für die jeweilige Vorrichtung gelten und umgekehrt die im Rahmen der jeweiligen Vorrichtung beschriebenen Merkmale entsprechend für das Verfahren gelten.

Bei dem Verfahren ist bevorzugt vorgesehen, dass ein Stromspeicher der Aufbewahrungs- und Transportvorrichtung aufgeladen wird, während die Vorrichtung als Aufbewahrungsvorrichtung an einer Entnahmestation aufgenommen ist.

Bevorzugt ist bei dem Verfahren eine Zentraleinheit vorgesehen, welche mit Aufbewahrungs- und Transportvorrichtungen und mit Verarbeitungseinrichtung kommuniziert, wobei eine Verarbeitungseinrichtung bei Unterschreitung eines vorgegebenen Mindestvorrats an Bauteilen ein Signal an die Zentraleinheit sendet und die Zentraleinheit auf das Signal hin eine Aufbewahrungs- und Transportvorrichtung mit den angeforderten Bauteilen zu der Verarbeitungseinrichtung entsendet.

Bevorzugt sind die Aufbewahrungs- und Transportvorrichtungen eingerichtet, innerhalb einer Produktionsumgebung autonom von der Zentraleinheit angewiesene Flugmanöver auszuführen. Im Schritt b) wird dann durch die Zentraleinheit der Aufbewahrungs- und Transportvorrichtung eine vorgegebene Verarbeitungseinrichtung als Ziel vorgegeben und anschließend von der Aufbewahrungs- und Transportvorrichtung angeflogen. Im Schritt e) erfolgt dann ein autonom durchgeführter Rückflug von der Verarbeitungseinrichtung zurück zu einer Befüllstation. Dieser Rückflug wird bevorzugt durch die Entnahmevorrichtung ausgelöst, wenn das Teilemagazin der entsprechenden Aufbewahrungs- und Transportvorrichtung geleert worden ist.

Bei dem vorgeschlagenen Verfahren ist nur ein geringer Aufwand für die Steuerung erforderlich, da die am Verfahren beteiligten Vorrichtungen sich weitgehend selbst verwalten. Die Aufbewahrungs- und Transportvorrichtungen erledigen nach Erhalt eines Ziels den Transport selbsttätig, ohne dass eine dauerhafte Fernsteuerung erforderlich ist. Die Entnahmestationen stellen für die jeweilige Verarbeitungseinrichtung ein Zwischenlager für Bauteile dar, welches bei Unterschreitung einer vorgegebenen Menge an Bauteilen selbsttätig bei einer zentralen Einrichtung Nachschub anfordert. Die Zentraleinheit muss lediglich prüfen, welche Aufbewahrungs- und Transportvorrichtungen gerade für einen Transport verfügbar sind und lässt dann eine verfügbaren Aufbewahrungs- und Transportvorrichtung gemäß der Schritte a) und b) des Verfahrens mit den angeforderten Bauteilen beladen und entsendet diese anschließend zu der Verarbeitungseinrichtung bzw. deren Entnahmestation.

Bevorzugt ist bei dem Verfahren vorgesehen, dass die Aufbewahrungs- und Transportvorrichtungen horizontale Flugbewegungen nur oberhalb einer vorgegebenen Mindestflughöhe ausführen.

Hierdurch wird in einer Produktionsumgebung das Risiko einer Kollision verringert. Die Mindestflughöhe wird bevorzugt derart vorgegeben, dass eine Kollision mit Menschen ausgeschlossen ist. Des Weiteren kann die Mindestflughöhe derart vorgegeben werden, dass diese die Höhe der in der Produktionsumgebung angeordneten Anlagen übersteigt, so dass auch die Gefahr einer Kollision mit Anlagenteilen verringert wird. Die Sicherheit bei der Ausführung des Verfahrens wird vorteilhaft erhöht. Somit wird die Mindestflughöhe bevorzugt im Bereich von 2 m bis 10 m, besonders bevorzugt im Bereich von 2,5 m bis 5 m vorgegeben.

Bei einer Fehlfunktion oder einer Erschöpfung des Energiespeichers ist es möglich, dass eine fliegende Aufbewahrungs- und Transportvorrichtung während des Fluges außer Kontrolle gerät oder sogar abstürzt. Um dabei die Gefahr einer Kollision mit Menschen zu vermeiden und damit die Sicherheit des Logistikverfahrens zu erhöhen wie auch zur Unfallverhütung beizutragen, ist bevorzugt vorgesehen, dass die horizontalen Flugbewegungen derart ausgeführt werden, dass bei der Ausführung von Flugmanövern die Anzahl von Überflügen von Gehwegen minimiert wird oder Gehwege nur an vorgegebenen Punkten überflogen werden. Bevorzugt werden somit die Flugmanöver derart geplant, dass diese über Produktionslinien erfolgen. Die vorgegebenen Punkte, an denen Gehwege überflogen werden, können mit einer Sicherung, beispielweise in Form einer Abdeckung, einem Gitter oder einem Netz, abgesichert werden.

Im Folgenden wird der Ablauf des Verfahrens an einem Beispiel beschrieben. Mit dem Verfahren wird in einer Produktionsumgebung, beispielsweise im Rahmen der Automobilherstellung, die Versorgung von Verarbeitungsstationen mit Bauteilen sichergestellt.

Der Verfahrensablauf wird von einer Zentraleinheit überwacht, die mit den beteiligten Flugmagazinen (Aufbewahrungs- und Transportvorrichtungen), den Verarbeitungsstationen, den Befüllstationen und dem Lager bzw. den Lagern vernetzt ist. Jede der beteiligten Vorrichtungen erhält eine eindeutige Identifikation, über die diese durch die Zentraleinheit angesprochen werden können.

Für die Vernetzung wird beispielsweise ein WLAN-Netzwerk verwendet, welches ausschließlich für die Kommunikation mit der zentralen Einrichtung verwendet wird.

Die Verarbeitungsstationen weisen jeweils mindestens eine Entnahmestation auf oder ihnen ist jeweils mindestens eine Entnahmestation zugeordnet, die als Zwischenpuffer für benötigte Bauteile dient. Je nach Anforderung kann einer Verarbeitungsstation genau eine Entnahmestation umfassen oder es können mehrere Entnahmestationen vorgesehen sein, beispielsweise von 2 bis 10 Entnahmestationen. In der Entnahmestation ist nach dem Anlaufen des Verfahrens zu jedem Zeitpunkt mindestens ein Flugmagazin vorhanden. So wird der Logistikprozess des Transportes von der Befüllstation an die Verarbeitungsstation mit dem eigentlichen Verwenden der Bauteile in der Verarbeitungsstation über den Zwischenpuffer entkoppelt. Bemerkt nun die Entnahmestation, dass ihr Zwischenpuffer mit den Bauteilen in Kürze leer wird, so sendet die Entnahmestation eine Anforderung an die Zentraleinheit.

Die Zentraleinheit ermittelt ein freies, gerade an einer Befüllstation aufgenommenes Flugmagazin und veranlasst, dass das Flugmagazin mit den benötigten Bauteilen beladen wird. Alternativ wird ein bereits mit den benötigten Bauteilen beladenes Flugmagazin angefordert. Anschließend übermittelt die Zentraleinheit den Startbefehl sowie die Adresse bzw. die Position, beispielsweise die GPS-Position, der Entnahmestation. Das Flugmagazin startet dann und navigiert selbstständig zur Entnahmestation. Die Flugbahn verläuft dabei idealerweise über den Produktionsstraßen in der Produktionsumgebung, um so Unfallrisiken zu vermeiden. In den Bereichen, wo dies nicht möglich ist, wird die Flugbahn nach unten mit einem Auffangnetz abgesichert, um so Menschen vor möglichen Abstürzen zu schützen.

Zusätzlich ist es für die Produktionshallen möglich, den Flugmagazinen einen Sperrbereich vorzugeben, in welchem die Mindestflughöhe festgelegt ist. Beispielsweise liegt der Sperrbereich bei einer Höhe unter 2,50 Meter, so dass Softwaretechnisch eine Höhe unter 2,50 über dem Hallenboden abgeriegelt ist. Dies Erhöht die Sicherheit des Logistikverfahrens.

Erkennt das Flugmagazin während des Fluges Hindernisse, beispielsweise über einen 3D-Ultraschallsensor, so werden diese selbstständig umflogen. Auch vermeidet das Flugmagazin die Kollision mit anderen Flugmagazinen.

Das Flugmagazin landet dann schließlich auf der adressierten Entnahmestation in einer Höhe von ca. 2,50 Meter. In der Entnahmestation wird es dann über einer Vertikal-Fördereinheit an den Handlingroboter in der Verarbeitungsstation herangeführt. Leere Flugmagazine starten wieder selbstständig in einer Höhe von ca. 2,50 Meter und navigieren zurück zur Befüllstation. Während der Verweildauer in der Entnahmestation werden die Energiespeicher des Flugmagazins aufgeladen.

Vorteilhafterweise können beim Einsatz der beschriebenen Flugmagazine im Logistikbereich, insbesondere im Bereich der Automobilproduktion, die üblichen fest installierten Logistik- und Fördersysteme eingespart werden. Insbesondere für die Versorgung der Verarbeitungsstationen mit leichten Bauteilen bietet sich der Einsatz des vorgeschlagenen Verfahrens an. Typische leichte Bauteile haben eine Masse von weniger als 10 kg, bevorzugt von weniger als 5 kg und besonders bevorzugt von weniger als 1 kg. Die maximale Masse eines Bauteils wird dabei von der maximalen Tragkraft einer Aufbewahrungs- und Transportvorrichtung begrenzt. Ebenso werden die maximalen Abmessungen eines Bauteils von den Abmessungen des Teilemagazins der Aufbewahrungs- und Transportvorrichtung begrenzt. Das Verfahren ermöglicht einen flexiblen Aufbau von Logistikkonzepten, die ohne großen Aufwand bei einer Veränderung von Produktionsprozessen umgestellt werden können.

Da keine fest installierten Logistiksysteme wie Förderbänder und dergleichen angeordnet werden müssen, kann der Transport frei über den Verarbeitungsstationen stattfinden. Der Platzbedarf in der Produktionsumgebung wird dadurch enorm verringert und bringt dadurch für den Produzenten wertvollen Platz für Produktionsanlagen oder Sonstiges hervor.

Das sonst relativ kosten- und platzaufwendige Überwinden von Höhenunterschieden mit fest installierten Fördersystemen entfällt durch den Einsatz von Flugmagazinen.

Durch die Verlagerung des Logistikprozesses auf eine Ebene oberhalb von beispielsweise 2,30 Metern und soweit möglich oberhalb der Produktionsanlagen bzw. Produktionsstraßen entsteht weiterhin eine deutliche Verbesserung in der Sicherheit von Produktionshallen, da die unfallreiche Logistik mit Transportwagen am Boden deutlich minimiert werden kann. Das Verfahren trägt somit zur Sicherheit und Unfallverhütung in einer Produktionsumgebung bei.

Durch die vorgeschlagenen Vorrichtungen und das vorgeschlagene Verfahren müssen die transportierten Bauteile an der Verarbeitungseinrichtung nicht erst in einen Vorratsbehälter der Verarbeitungseinrichtung, wie beispielsweise ein Teilemagazin, umgepackt werden. Vielmehr werden die durch die Verarbeitungseinrichtung benötigten Bauteile direkt bei Bedarf aus der vorgeschlagenen Aufbewahrungs-und Transportvorrichtung entnommen, so dass die Vorrichtung nach dem Transport als Aufbewahrungsvorrichtung für die Bauteile dient.

Vorteilhafterweise muss die vorgeschlagene Aufbewahrungs- und Transportvorrichtung nicht speziell an die zu transportierenden Bauteile angepasst werden und es sind keine speziellen Umverpackungen für die zu transportierenden Bauteile erforderlich.

### Kurze Beschreibung der Figuren

Ausführungsbeispiele der Erfindung sind in den Zeichnungen dargestellt und in der nachfolgenden Beschreibung näher erläutert. Es zeigen
- Figur 1: eine Aufbewahrungs- und Transportvorrichtung in einer Ansicht von oben,
- Figur 2: eine Schnittansicht der Aufbewahrungs- und Transportvorrichtung,
- Figur 3: eine perspektivische Darstellung der Aufbewahrungs- und Transportvorrichtung,
- Figur 4: eine schematische Darstellung einer Entnahmestation und
- Figur 5: eine schematische Darstellung einer Befüllstation.

In der nachfolgenden Beschreibung der Ausführungsbeispiele der Erfindung werden gleiche Komponenten mit gleichen Bezugszeichen bezeichnet, wobei auf eine wiederholte Beschreibung dieser Komponenten in Einzelfällen verzichtet wird. Die Figuren stellen den Gegenstand der Erfindung nur schematisch dar.

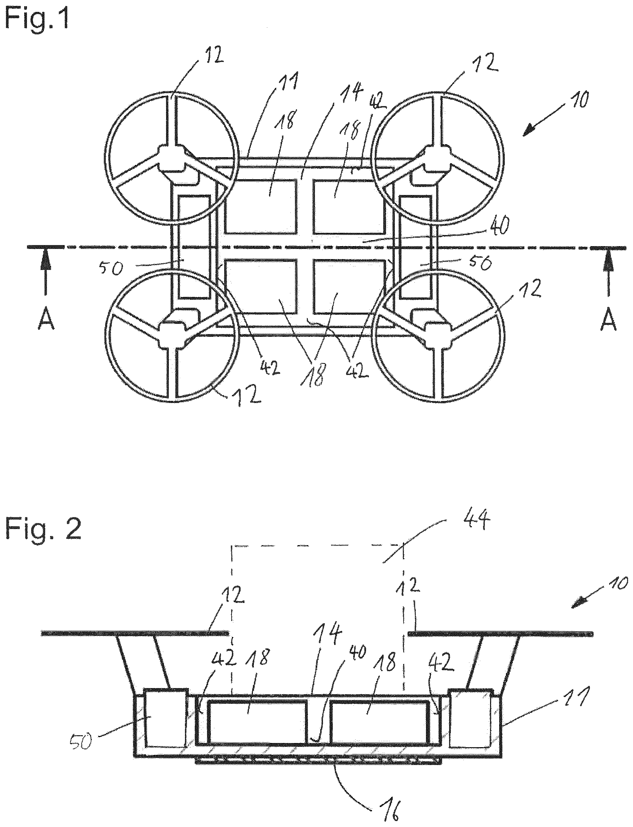

Figur 1 zeigt eine Aufbewahrungs- und Transportvorrichtung 10 in einer Ansicht von oben. Die Aufbewahrungs- und Transportvorrichtung 10 umfasst einen Multicopter 11, der in der dargestellten Ausführungsform als Quadcopter ausgeführt ist, also vier Rotoren 12 aufweist. Der Multicopter 11 umfasst zwei Energiespeicher 50, beispielsweise in Form von Akkumulatoren, die ausbalanciert angeordnet sind. Die Vorrichtung umfasst des Weiteren ein Teilemagazin 14, welches mit dem Multicopter 11 eine untrennbare Einheit ausbildet. Das Teilemagazin 14 ist quaderförmig ausgestaltet und umfasst einen Boden 40 und vier Seitenwände 42.

In dem in der Figur 1 dargestellten Beispiel sind in dem Teilemagazin 14 vier Bauteile 18 aufgenommen. Das Teilemagazin 14 ist nach oben offen, so dass die Bauteile 18 von der Oberseite des Teilemagazins 14 aus zugänglich sind. Die Rotoren 12 überlappen in dem in Figur 1 dargestellten Beispiel geringfügig mit der Grundfläche des Teilemagazins 14. Zur Entnahme der Bauteile 18 werden diese im Teilemagazin 14 von oben gegriffen, über die Seitenwände 42 des Teilemagazins 14 hinaus angehoben und anschließend in einer Richtung parallel zur Grundfläche des Teilemagazins 14 aus dem Bereich der Rotoren 12 entfernt.

In der Figur 2 ist ein Schnitt entlang der in Figur 1 mit A markierten Linie dargestellt. Oberhalb des Teilemagazins 14 ist ein Freiraum 44 zu erkennen. Der Freiraum 44 stellt einen Bereich dar, über den ein Zugang zum Teilemagazin 14 von oben frei möglich ist, ohne dass dieser durch die Rotoren 12 behindert wird.

Die Aufbewahrungs- und Transportvorrichtung 10 umfasst in der dargestellten Ausführungsform zusätzlich eine Anzeigeeinheit 16, welche optisch Information darstellen kann. Die Informationen können dabei kodiert sein, beispielsweise als 1 D-Barcode oder als 2D-Matrixcode, oder können beispielsweise über Symbole oder Bilder die in dem Teilemagazin 14 aufgenommenen Bauteile 18 darstellen.

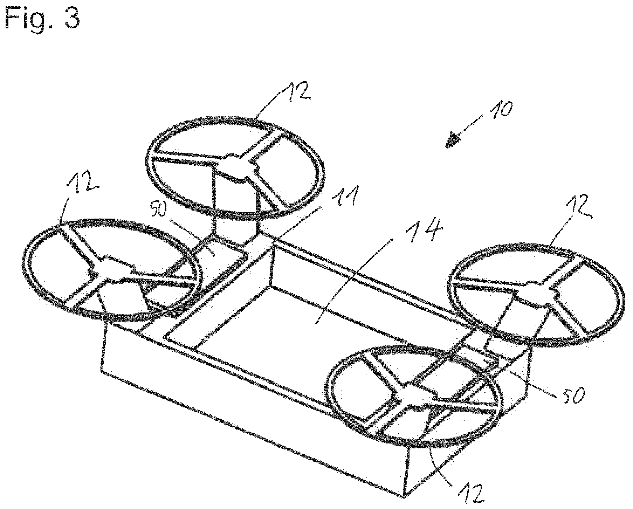

Figur 3 zeigt eine perspektivische Darstellung der bereits mit Bezug zu den Figuren 1 und 2 beschriebenen Aufbewahrungs- und Transportvorrichtung 10.

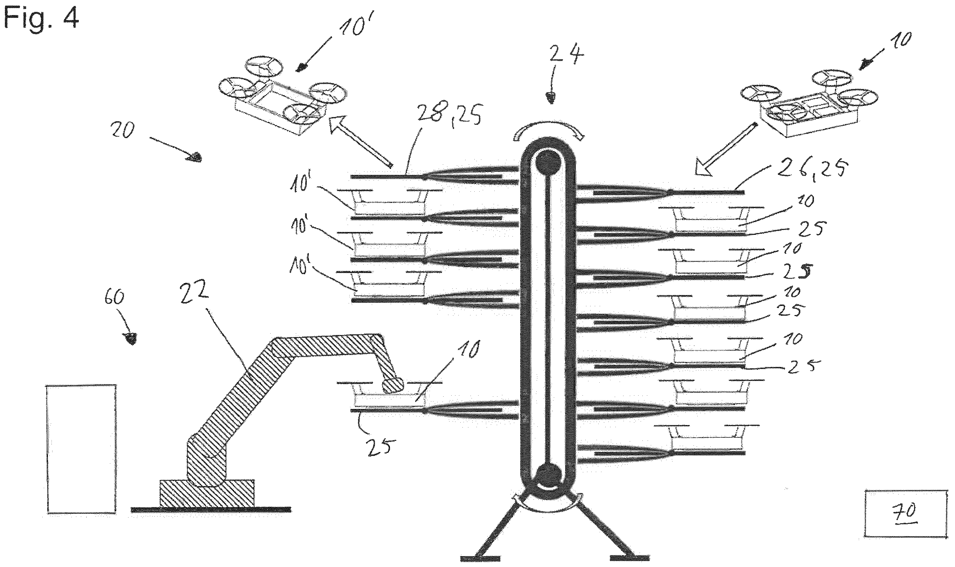

Figur 4 zeigt eine schematische Darstellung einer Entnahmestation 20, die Teil einer Verarbeitungsstation 60 ist. Die Entnahmestation 20 umfasst in der dargestellten Ausführungsform einen Zwischenspeicher 24, der hier als vertikaler Stauförderer ausgeführt ist. Der Zwischenspeicher 24 umfasst eine Vielzahl von Aufnahmen 25, die jeweils zur Aufnahme eine Aufbewahrungs- und Transportvorrichtung 10 eingerichtet sind. Die jeweils obersten Aufnahmen 25 dienen als Zugabestelle 26, auf der ankommende Aufbewahrungs- und Transportvorrichtung 10 landen bzw. als Ausgabestelle 28, von der leere Aufbewahrungs- und Transportvorrichtungen 10' wieder starten.

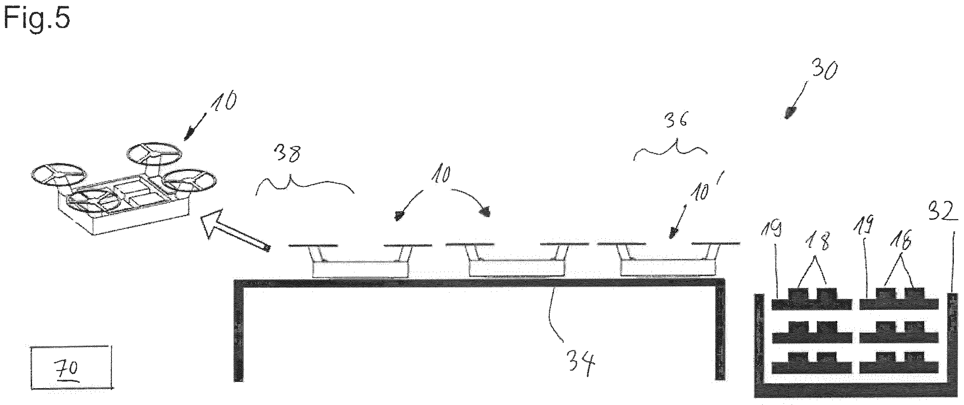

Der Ablauf des Verfahrens wird von einer Zentraleinheit 70 überwacht. Die Zentraleinheit 70 steht über eine Kommunikationsverbindung mit den Aufbewahrungs- und Transportvorrichtungen 10, 10' sowie der Entnahmestation 20 in Verbindung. Des Weiteren steht die Zentraleinheit 70 mit einem Lager und einer Befüllstation, vergleiche Figur 5, in Verbindung.

Wird durch die Verarbeitungsstation 60 bzw. durch die Entnahmestation 20 erkannt, dass die Menge an in der Entnahmestation 20 vorgehaltenen Bauteilen unter eine vorgegebene Mindestmenge fällt, wird ein Signal an die Zentraleinheit 70 gesendet und Bauteile angefordert. Werden Bauteile angefordert, so wird von einer zentralen Einrichtung 70 veranlasst, dass eine Aufbewahrungs- und Transportvorrichtung 10 an einer Befüllstation mit den angeforderten Bauteilen beladen wird und zur Entnahmestation 20 geschickt wird. Die Aufbewahrungs- und Transportvorrichtung 10 landet dann an der Zugabestelle 26 und wird in dem Zwischenspeicher 24 aufgenommen.

Der Zwischenspeicher 24 befördert die aufgenommenen Aufbewahrungs- und Transportvorrichtungen 10 nacheinander zu einer Entnahmevorrichtung 22, die wie im in der Figur 4 dargestellten Ausführungsbeispiel auch Teil der Verarbeitungsstation 60 ist. Die Entnahmevorrichtung 22 ist hier als ein Roboterarm ausgestaltet, der von oben in das Teilemagazin 14 der Aufbewahrungs- und Transportvorrichtungen 10 eingreift und die benötigten Bauteil nach oben entnimmt.

Die geleerten Aufbewahrungs- und Transportvorrichtungen 10' werden durch den Zwischenspeicher 24 weiter befördert, bis diese an der Ausgabestelle 28 angekommen sind. An der Ausgabestelle 28 starten die geleerten Aufbewahrungs-und Transportvorrichtungen 10' und verlassen somit den Zwischenspeicher 24. Die geleerten Aufbewahrungs- und Transportvorrichtungen 10' kehren zu einer Befüllstation zurück, so dass der Prozess von neuem beginnen kann.

Figur 5 zeigt eine schematische Darstellung einer Befüllstation 30. Die Befüllstation 30 umfasst einen Zwischenspeicher 34, der in der dargestellten Ausführungsform als Drehtisch ausgeführt ist. Geleerte Aufbewahrungs- und Transportvorrichtungen 10' landen an einer Landeposition 36 auf dem Drehtisch und werden aus einem Lager 32 mit Bauteilen 18 beladen. Die Bauteile 18 können sich dabei in einer Schablone bzw. einem Tray 19 befinden. Dabei ist es möglich, die Bauteile 18 einzeln oder zusammen mit dem Tray 19 in das Teilemagazin 14 der Aufbewahrungs- und Transportvorrichtung 10 einzuladen.

Die beladenen Aufbewahrungs- und Transportvorrichtungen 10 werden auf dem Drehtisch zu einer Startposition 38 gefördert und starten von dort aus zu einer Verarbeitungsstation 60 bzw. zu einer dieser zugeordneten Entnahmestation 20.

Die Erfindung ist nicht auf die hier beschriebenen Ausführungsbeispiele und die darin hervorgehobenen Aspekte beschränkt. Vielmehr sind innerhalb des durch die Ansprüche angegebenen Bereichs eine Vielzahl von Abwandlungen möglich, die im Rahmen fachmännischen Handelns liegen.

### Bezugszeichenliste

- 10: Aufbewahrungs- und Transportvorrichtung
- 10': Aufbewahrungs- und Transportvorrichtung (leer)
- 11: Multicopter
- 12: Rotor
- 14: Teilemagazin
- 16: Anzeigeeinheit
- 18: Bauteil
- 19: Schablone (Tray)
- 20: Entnahmestation
- 22: Entnahmevorrichtung
- 24: Zwischenspeicher
- 25: Aufnahme
- 26: Zugabestelle
- 28: Ausgabestelle
- 30: Befüllstation
- 32: Lager
- 34: Zwischenspeicher
- 36: Landeposition
- 38: Startposition
- 40: Boden
- 42: Seitenwand
- 44: Freiraum
- 50: Energiespeicher
- 60: Verarbeitungsstation
- 70: Zentraleinheit

## Patentansprüche

1. Aufbewahrungs- und Transportvorrichtung (10) zum Aufbewahren und Transportieren von Bauteilen (18), umfassend einen Multicopter (11) und mindestens ein Teilemagazin (14) zur Aufnahme von Bauteilen (18), wobei das Teilemagazin (14) einen Boden (40) und Seitenwände (42) aufweist und wobei die Vorrichtung (10) für einen fliegenden Transport der im Teilemagazin (14) aufgenommenen Bauteile (18) eingerichtet ist, **dadurch gekennzeichnet, dass** das mindestens eine Teilemagazin (14) fest mit dem Multicopter (11) verbunden ist und die Vorrichtung (10) ferner eingerichtet ist, als Aufbewahrungseinrichtung an einer Entnahmestation (20) aufgenommen zu werden, wobei in dem Teilemagazin (14) aufgenommene Bauteile (18) durch die Entnahmestation (20) von oben aus dem Teilemagazin (14) entnehmbar sind, wobei das Teilemagazin (14) so ausgestaltet ist, dass die Oberseite des Teilemagazins (14) der Vorrichtung (10), wenn diese an einer Entnahmestation (20) und/oder an einer Befüllstation (30) aufgenommen ist, für das Beladen und das Entladen frei zugänglich ist, wobei ein Freiraum oberhalb des Teilemagazins (14) vorhanden ist, der eine vollautomatisierte Entnahme von in dem Teilemagazin (14) aufgenommenen Bauteilen nach oben gestattet, wobei entweder die Oberseite des Teilemagazins (14) immer offen zugänglich ist oder die Oberseite des Teilemagazins (14) verschließbar ist, so dass die Oberseite des Teilemagazins (14) während des fliegenden Transports verschlossen ist, wobei die Verschlusseinrichtung einen Antrieb umfasst, über den ein Öffnen und ein Schließen der Verschlusseinrichtung automatisierbar ist.

2. Vorrichtung (10) nach Anspruch 1, **dadurch gekennzeichnet, dass** die Vorrichtung (10) zum Verschließen des Teilemagazins (14) eine Verschlusseinrichtung, insbesondere einen Rollverschluss oder einen horizontalen Schutzvorhang, umfasst, die die Oberseite des Teilemagazins (14) während des fliegenden Transports verschließt.

3. Vorrichtung (10) nach Anspruch 1 oder 2, **dadurch gekennzeichnet, dass** diese an ihrer Unterseite eine Anzeigeeinheit (16) zur Darstellung eines optischen Codes umfasst, wobei der optische Code ausgewählt ist aus 1 D-Barcodes, 2D-Matrixcodes und Farbcodes.

4. Vorrichtung (10) nach Anspruch 3, **dadurch gekennzeichnet, dass** die Vorrichtung (10) eingerichtet ist über den optischen Code Daten auszugeben, wobei die Daten ausgewählt sind aus Angaben über den Inhalt des Teilemagazins, Angaben über das Flugziel und Angaben über den Ladezustand eines Energiespeichers.

5. Vorrichtung (10) nach einem der Ansprüche 1 bis 4, **dadurch gekennzeichnet, dass** das Teilemagazin (10) eine wechselbare Schablone (19) zur Aufnahme der Bauteile (18) umfasst.

6. Vorrichtung (10) nach einem der Ansprüche 1 bis 5, **dadurch gekennzeichnet, dass** die Vorrichtung ein Smartphone oder ein Tablet als Steuereinrichtung und/oder als Anzeigeeinheit (16) umfasst.

7. Entnahmestation (20) zur Entnahme von Bauteilen (18) aus einer Aufbewahrungs- und Transportvorrichtung (10) gemäß einem der Ansprüche 1 bis 6, **dadurch gekennzeichnet, dass** die Entnahmestation (20) eingerichtet ist, mindestens eine Aufbewahrungs-und Transportvorrichtung (10) als Aufbewahrungsvorrichtung aufzunehmen, dass die Entnahmestation (20) eine Entnahmevorrichtung (22) umfasst, welche eingerichtet ist, Bauteile (18) aus dem Teilemagazin (14) einer Aufbewahrungs- und Transportvorrichtung (10) zu entnehmen, und dass die Entnahmestation (20) eingerichtet ist, bei Unterschreitung eines vorgegebenen Vorrats an Bauteilen (18) in den aufgenommen Aufbewahrungs- und Transportvorrichtungen (10) ein Signal an eine Zentraleinheit (70) zu senden.

8. Entnahmestation (20) nach Anspruch 7, **dadurch gekennzeichnet, dass** die Entnahmestation (20) des Weiteren einen Zwischenspeicher (24) umfasst, der zur Aufnahme einer Vielzahl von Aufbewahrungs- und Transportvorrichtungen (10) gemäß einem der Ansprüche 1 bis 7 eingerichtet ist, wobei der Zwischenspeicher (24) eingerichtet ist, die aufgenommenen Aufbewahrungs- und Transportvorrichtungen (10) nacheinander der Entnahmevorrichtung (22) zuzuführen, welche Bauteile (18) aus den Teilemagazinen (14) entnimmt.

9. Entnahmestation (20) nach Anspruch 8, **dadurch gekennzeichnet, dass** der Zwischenspeicher (24) als Stauförderer oder als Drehtisch ausgeführt ist, wobei der Zwischenspeicher (24) derart eingerichtet ist, dass beladene Aufbewahrungs- und Transportvorrichtungen (10) an einer Zugabestelle (26) landen und in den Zwischenspeicher (24) eingegeben werden, zur der Entnahmevorrichtung (22) gefördert werden, die entladenen Aufbewahrungs-und Transportvorrichtungen (10') zu einer Ausgabestelle (28) gefördert werden, an der Ausgabestelle (28) den Zwischenspeicher (24) verlassen und wieder starten.

10. Verfahren zur Versorgung mindestens einer Verarbeitungseinrichtung (60) mit Bauteilen (18) unter Verwendung mindestens einer Aufbewahrungs- und Transportvorrichtung (10) gemäß einem der Ansprüche 1 bis 6, wobei Bauteile (18) von mindestens einem Lager (32) zu mindestens einer Verarbeitungseinrichtung (60) transportiert werden und die mindestens eine Verarbeitungseinrichtung (60) einen Vorrat an Bauteilen (18) aufweist, umfassend die Schritte:
a) Beladen einer Aufbewahrungs- und Transportvorrichtung (10) mit Bauteilen (18) aus einem Lager (32) an einer Befüllstation (30),
b) fliegender Transport der Bauteile (18) von der Befüllstation (30) zu mindestens einer Verarbeitungseinrichtung (60) durch die Aufbewahrungs- und Transportvorrichtung (10),
c) Aufnehmen der Aufbewahrungs- und Transportvorrichtung (10) als Aufbewahrungsvorrichtung an einer Entnahmestation (20) der Verarbeitungseinrichtung (60), wobei die Entnahmestation (20) gemäß einem der Ansprüche 7 bis 9 ausgestaltet ist,
d) Entnehmen der Bauteile (18) aus der Aufbewahrungs- und Transportvorrichtung (10),
e) Rückflug der Aufbewahrungs- und Transportvorrichtung (10) von der Verarbeitungseinrichtung (60) zu einer Befüllstation (30).

11. Verfahren nach Anspruch 10, **dadurch gekennzeichnet, dass** an der Entnahmestation (20) der Verarbeitungseinrichtung (60) nach einer erstmaligen Versorgung der Verarbeitungseinrichtung (60) mit Bauteilen (18) zu jedem Zeitpunkt mindestens eine Aufbewahrungs- und Transportvorrichtung (10) aufgenommen ist.

12. Verfahren nach Anspruch 10 oder 11, **dadurch gekennzeichnet, dass** eine Zentraleinheit (70) vorgesehen ist, welche mit Aufbewahrungs- und Transportvorrichtungen (10) und mit Verarbeitungseinrichtung kommuniziert, **dadurch gekennzeichnet, dass** eine Verarbeitungseinrichtung (60) bei Unterschreitung eines vorgegebenen Mindestvorrats an Bauteilen (18) ein Signal an die Zentraleinheit (70) sendet und die Zentraleinheit (70) auf das Signal hin eine Aufbewahrungs- und Transportvorrichtung (10) mit den angeforderten Bauteilen zu der Verarbeitungseinrichtung (60) entsendet.

13. Verfahren nach einem der Ansprüche 10 bis 12, **dadurch gekennzeichnet, dass** die Aufbewahrungs- und Transportvorrichtungen (10) horizontale Flugbewegungen nur oberhalb einer vorgegebenen Mindestflughöhe ausführen.

14. Verfahren nach einem der Ansprüche 10 bis 13, **dadurch gekennzeichnet, dass** die horizontalen Flugbewegungen derart ausgeführt werden, dass bei der Ausführung von Flugmanövern die Anzahl von Überflügen von Gehwegen minimiert wird und/oder Gehwege nur an vorgegebenen Punkten überflogen werden.
